# EUROPÄISCHE PATENTSCHRIFT

(11) **EP 0 337 070 B1**
(45) Veröffentlichungstag und Bekanntmachung des Hinweises auf die Patenterteilung: **10.11.1993**
(21) Anmeldenummer: 89102395.4
(22) Anmeldetag: 11.02.1989
(51) Int. Cl.: B60R 13/00, B60K 11/08

(54) **Kraftfahrzeug mit einem Verkleidungsteil**
Motor vehicle with a trimming part
Véhicule automobile comportant un élément d'habillage

(30) Priorität: 14.04.1988 DE 3812347
(43) Veröffentlichungstag der Anmeldung: 18.10.1989
(73) Patentinhaber: Dr.Ing.h.c. F. Porsche Aktiengesellschaft, 70435 Stuttgart (DE)
(72) Erfinder: Pfister, Klaus, Dipl.-Ing., D-7135 Wiernsheim (DE)

(56) Entgegenhaltungen:
- DE-A- 2 355 972
- DE-U- 7 009 036
- US-A- 4 379 648
- US-A- 4 406 489
- US-A- 4 652 036

## Beschreibung

Die Erfindung betrifft ein Kraftfahrzeug mit einem Verkleidungsteil gemäß dem Oberbegriff des Patentanspruchs 1.

Bei einem bekannten Kraftfahrzeug (DE-A-23 55 972) ist ein Verkleidungsteil über Schnappverbindungen am angrenzenden Aufbauteil in Lage gehalten, wobei jede Schnappverbindung einen am Verkleidungsteil angeformten Schnapphaken umfasst, der in eine Ausnehmung des Aufbauteils eingreift. Alle Ränder der Ausnehmung sind bei dieser Anordnung relativ starr ausgebildet. Wegen der geringen Elastizität der Ausnehmung darf der Schnappkopf nur geringfügig größer ausgebildet sein als die Höhe der Ausnehmung, um einerseits ein Hindurchführen durch die Ausnehmung zu gewährleisten und andererseits ein Hintergreifen der Ausnehmung zu bewirken. Der Fußabschnitt des Schnapphakens verlauft jedoch mit Abstand zur Ausnehmung, so daß, bedingt durch die Alterung des Kunststoffes, Klappergeräusche zwischen Verkleidungsteil und Aufbauteil auftreten können.

Bei einem weiteren bekannten Kraftfahrzeug (US-PS 4,354,566) wird das Verkleidungsteil unter Vermittlung eines zusätzlichen Befestigungselementes am Aufbau in Lage gehalten. Das Befestigungselement wird einerseits über eine Clipsverbindung am Aufbauteil fixiert und weist andererseits Schnapphaken auf, die in Ausnehmungen der Verkleidungsteiles eingreifen.

Dieser Anordnung haftet der Nachteil an, daß wegen der separaten Befestigungselemente die Montage und Befestigung des Verkleidungsteiles kostenaufwendig ist. Da die Ausnehmungen für die Schnapphaken eine wesentlich größere Höhe aufweisen als die Fußabschnitte der Schnapphaken, kann es vorkommen, daß bedingt durch die Alterung des Kunststoffes Klappergeräusche zwischen Befestigungselement und Verkleidungsteil auftreten.

Aufgabe der Erfindung ist es, bei leichter Montage und einfachem Aufbau eine kostengünstige Befestigung eines Verkleidungsteiles an einem angrenzenden Aufbauteil zu schaffen. Darüber hinaus soll langzeitig eine sichere klapperfreie Verbindung zwischen Verkleidungsteil und Aufbauteil geschaffen werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daR durch die unmittelbare Befestigung des Verkleidungsteiles am Aufbauteil die Montage wesentlich erleichtert und durch den Entfall des zusätzlichen Befestigungselementes die Kosten reduziert werden. Durch den die Ausnehmung begrenzenden, federnd nachgiebigen Steg wird eine leichte Montage und ein sicherer, klapperfreier Sitz des Verkleidungsteiles gewährleistet.

Ein Ausführungsbeispiel der Erfindung ist in der Zeichnung dargestellt und wird im folgenden näher erläutert.

Es zeigt
- Fig. 1: einen Vertikalschnitt durch ein Verkleidungsteil und ein Aufbauteil eines Kraftfahrzeuges,
- Fig. 2: eine Teilansicht in Pfeilrichtung R der Fig. 1 in größerem Maßstab,

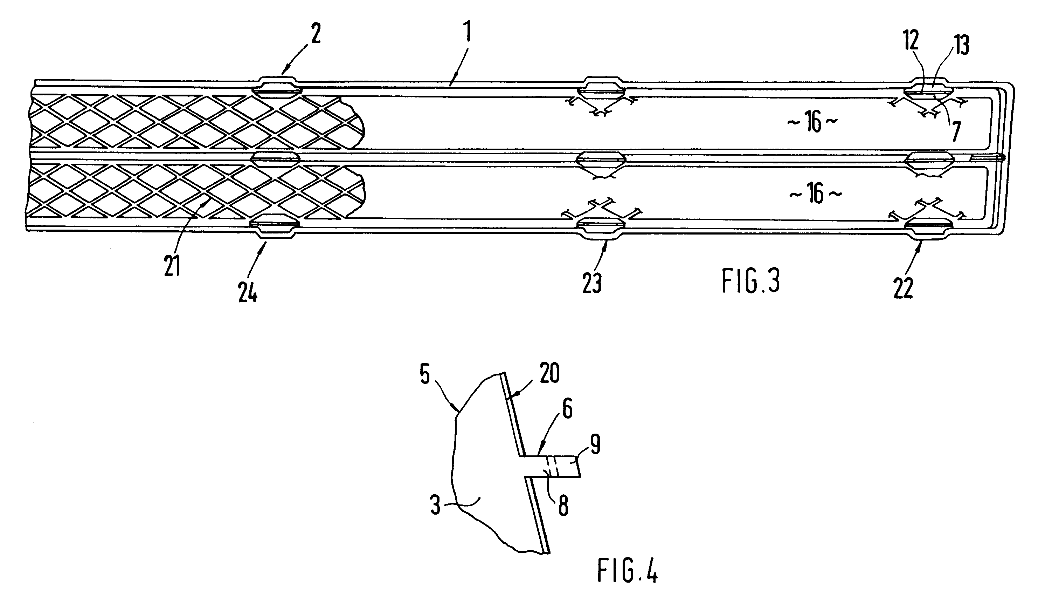

- Fig. 3: eine Teilansicht in Pfeilrichtung S der Fig. 1 auf das Verkleidungsteil in kleinerem Maßstab,
- Fig. 4: eine Teilansicht in Pfeilrichtung T der Fig. 1.

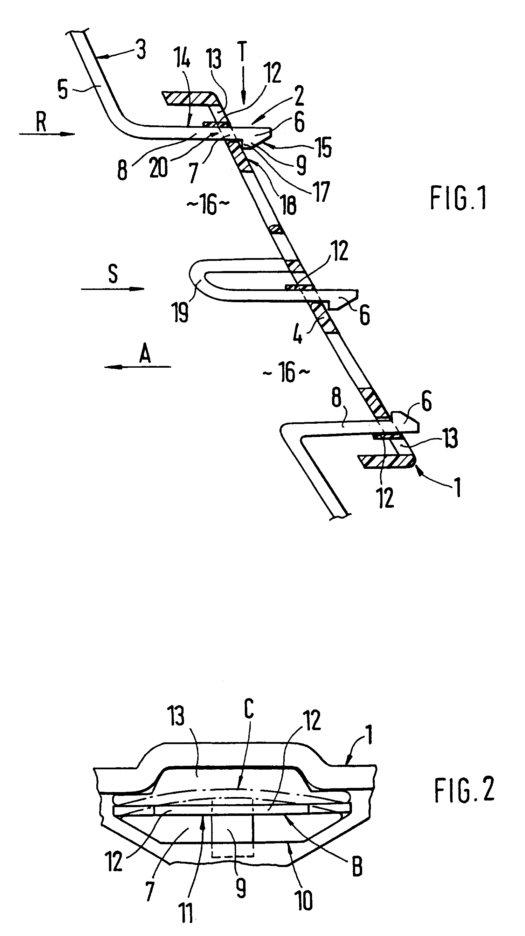

In Fig. 1 ist ein aus Kunststoff hergestelltes Verkleidungsteil 1 für ein Kraftfahrzeug dargestellt, das über mehrere Schnappverbindungen 2 am angrenzenden Aufbauteil 3 in Lage gehalten ist. Das Verkleidungsteil 1 wird im Ausführungsbeispiel durch ein bugseitig angeordnetes Lufteinlaßgitter 4 gebildet. Das Aufbauteil 3 ist gemäß Fig. 1 als eine Bugverkleidung 5 dargestellt, die aus einem elastischen Werkstoff wie glasfaserverstärktem Kunststoff oder dergleichen, gefertigt ist.

Eine einfache kostengünstige Befestigung des Verkleidungsteiles 1 wird dadurch erzielt, daß letzteres ohne zusätzliche Befestigungselemente (Klammern, Schrauben oder dergleichen) am Aufbauteil 3 befestigt ist. Jede Schnappverbindung 2 umfaßt einen am Aufbauteil 3 angespritzten Schnapphaken 6, der in eine zugeordnete Ausnehmung 7 des aufgesetzten Verkleidungsteiles 1 eingreift. Die einstückig mit dem Aufbauteil 3 ausgebildeten Schnapphaken 6 sind etwa horizontal ausgerichet und vom Aufbauteil 3 entgegen der Fahrtrichtung A weggeführt. Jeder Schnapphaken 6 umfaßt einen Fußabschnitt 8 und einen Schnappkopf 9, wobei der Schnappkopf 9 eine größere Höhe aufweist als der Fußabschnitt 8.

Die Ausnehmung 7 am Verkleidungsteil 1 weist annähernd eine Trapezform 10 auf, wobei die längere der horizontal ausgerichteten Seiten 11 des Trapezes benachbart einem federnd nachgiebigen Steg 12 des Verkleidungsteiles 1 verläuft.

Die Ausnehmung 7 weist eine wesentlich größere Breite auf als der Schnappkopf 9, so daß unterschiedliche Längenausdehnungen von Verkleidungsteil 1 und Aufbauteil 3 kompensiert werden können. Der federnd nachgiebige Steg 12 erstreckt sich zwischen der den Schnapphaken 6 aufnehmenden Ausnehmung 7 und einem benachbart dazu angeordneten Längsschlitz 13. Der Längsschlitz 13 weist in einem mittleren Bereich seiner Quererstreckung eine größere Höhe auf als in den seitlich außenliegenden Randbereichen. Der Steg 12 ist oberhalb der eben ausgebildeten Außenfläche 14 des Schnapphakens 6 vorgesehen und in Höhenrichtung gesehen, relativ dünnwandig ausgebildet, so daß er bei der Montage des Verkleidungsteiles 1 von einer etwa horizontal verlaufenden Ruhestellung B in eine nach außen gebogene, strichpunktiert dargestellte Einbaulage C, bewegbar ist. Nach dem Hindurchführen des Schnappkopfes 9 kehrt der Steg 12 wieder in seine Ruhestellung B zurück. Die Ausnehmung 7 weist eine geringfügig größere Höhe auf als der Fußabschnitt 8 des Schnapphakens 6 (Spielsitz), wogegen der Schnappkopf 9 eine größere Höhe besitzt als die Ausnehmung 7.

Eine am Schnappkopf 9 vorgesehene, schrägverlaufende Anlauffläche 15 erleichtert das Einführen des Schnapphakens 6 in die Ausnehmungen 7. Die Schnappköpfe 9 sind lediglich im Bereich der Befestigungsstellen für das Verkleidungsteil 1 vorgesehen, wogegen sich die Fußabschnitte 8 der Schnapphaken 6 über die gesamte Breite des Aufbauteiles 3 erstrecken und zwei übereinanderliegende Luftführungskanäle 16 am Aufbauteil 3 bilden. Die Luftführungskanäle 16 weisen im Bereich des Verkleidungsteiles 1 eine großmaschige Gitterstruktur 21 auf.

Für das relativ großflächige Verkleidungsteil 1 sind mehrere nebeneinander - und übereinanderliegend angeordente Schnappverbindungen 2 vorgesehen.

Gemäß Fig. 1 überragen die Schnappköpfe 9 das Verkleidungsteil 1 nach hinten hin, wobei sich ein stufenförmiger Absatz 17 des Schnappkopfes 9 an der hintenliegenden Seite 18 des Verkleidungsteiles 1 abstützt. Das Aufbauteil 3 weist zwei übereinanderliegende Luftführungskanäle 16 auf, die von den außenliegenden, horizontalen Fußabschnitten 8 der Schnapphaken 6 und einem etwa U-förmigen Mittelsteg 19 begrenzt werden. Die Schnapphaken 6 sind von der Fahrzeugaußenseite her unsichtbar angeordnet.

Das Verkleidungsteil 1 wird von hinten auf das Aufbauteil 3 aufgesetzt. In Fahrzeuglängsrichtung gesehen, wird das Verkleidungsteil durch den Schnappkopf 9 und schrägverlaufende Wandabschnitte 20 des Aufbauteiles 3 fixiert, wobei die schrägverlaufenden Wandabschnitte 20 auf der den stufenförmigen Absätzen 17 gegenüberliegenden Seite des Aufbauteiles 3 angeordnet sind. Gemäß Fig. 2 sind bei 22, 23 und 24 am Verkleidungsteil 1 jeweils drei übereinanderliegend angeordnete Schnappverbindungen 2 vorgesehen.

## Patentansprüche

1. Kraftfahrzeug mit einem Verkleidungsteil (1), das über Schnappverbindungen (2) an einem angrenzenden Aufbauteil (3) in Lage gehalten ist, wobei jede Schnappverbindung (2) einen Schnapphaken (6) umfasst, der in eine zugeordnete Ausnehmung (7) eingreift, **dadurch gekennzeichnet**, daß ein Rand der Ausnehmung (7) durch einen federnd nachgiebigen Steg (12) gebildet wird, der zwischen der den Schnapphaken (6) aufnehmenden Ausnehmung (7) und einer benachbart dazu angeordneten Schlitzöffnung (13) verläuft, wobei die Ausnehmung (7) eine geringfügig größere Höhe aufweist als ein Fußabschnitt (8) des Schnapphakens (6) und daß der federnde Steg (12) beim Hindurchführen eines Schnappkopfes (9) des Schnapphakens (6) nach außen in eine gebogene Einbaulage C bewegt wird und daß der Steg (12) nach Hindurchführen des Schnappkopfes (9) wieder in seine Ursprungslage (B) zurückkehrt.

2. Kraftfahrzeug nach Anspruch 1, **dadurch gekennzeichnet**, daß die Ausnehmung (7) an dem aus Kunststoff gefertigten Verkleidungsteil (1) vorgesehen ist, wogegen der Schnapphaken (6) an dem aus Kunststoff hergestellten Aufbauteil (3) angeformt ist.

3. Kraftfahrzeug nach Anspruch 2, **dadurch gekennzeichnet**, daß das Verkleidungsteil (1) durch ein Lufteinlaßgitter (4) gebildet wird.

4. Kraftfahrzeug nach Anspruch 2, **dadurch gekennzeichnet**, daß das Aufbauteil (3) durch eine aus elastischem Werkstoff gefertigte Bugverkleidung (5) dargestellt ist.

5. Kraftfahrzeug nach Anspruch 1, **dadurch gekennzeichnet**, daß der Steg (12) benachbart der eben ausgebildeten Außenflache (14) des Schnapphakens (6) verläuft.

6. Kraftfahrzeug nach Anspruch 1, **dadurch gekennzeichnet**, daß der Steg (12) - in Höhenrichtung gesehen - relativ dünnwandig ausgebildet ist.

7. Kraftfahrzeug nach Anspruch 1, **dadurch gekennzeichnet**, daß am Schnappkopf (9) eine schrägverlaufende Anlauffläche (15) vorgesehen ist.

8. Kraftfahrzeug nach Anspruch 1, **dadurch gekennzeichnet**, daß die Ausnehmung (7) am Verkleidungsteil (1) eine wesentlich größere Breite aufweist als der am Aufbauteil (1) angeformte Schnapphaken (6).

## Claims

1. A motor vehicle with a trim part (1) held in position by way of snap connexions (2) on an adjacent body part (3), wherein each snap connexion (2) comprises a snap barb (6) engaging in an associated recess (7), **characterized in that** one edge of the recess (7) is formed by a resiliently yielding web (12) which extends between the recess (7) receiving the snap barb (6) and a slot opening (13) arranged adjacent thereto, the recess (7) being at a slightly greater height than a foot portion (8) of the snap barb (6), and the resilient web (12) is moved outwards into a bent insertion position **C** when a snap head (9) of the snap barb (6) passes through, and the web (12) is returned to its original position (B) again after the snap head (9) has passed through.

2. A motor vehicle according to Claim 1, **characterized in that** the recess (7) is provided on the trim part (1) produced from plastics material, whereas the snap barb (6) is moulded integrally onto the body part (3) produced from plastics material.

3. A motor vehicle according to Claim 2, **characterized in that** the trim part (1) is formed by an air-inlet grille (4).

4. A motor vehicle according to Claim 2, **characterized in that** the body part (3) is formed by a front covering (5) produced from resilient material.

5. A motor vehicle according to Claim 1, **characterized in that** the web (12) extends adjacent to the flat outer face (14) of the snap barb (6).

6. A motor vehicle according to Claim 1, **characterized in that** the web (12) is constructed with relatively thin walls as viewed in the vertical direction.

7. A motor vehicle according to Claim 1, **characterized in that** an obliquely extending run-up face (15) is provided on the snap head (9).

8. A motor vehicle according to Claim 1, **characterized in that** the recess (7) on the trim part (1) has a substantially greater width than the snap barb (6) integrally moulded on the body part (1) [*sic*].

## Revendications

1. Véhicule automobile comportant un élément d'habillage (1) qui est maintenu en position sur un élément de carrosserie (3) adjacent, par des assemblages à encliquetage (2), chaque assemblage à encliquetage (2) comportant un crochet d'encliquetage (6) qui s'engage dans un évidement (7) correspondant, caractérisé en ce qu'un bord de l'évidement (7) est formé par une cloison (12) souple formant ressort, qui s'étend entre l'évidement (7) logeant le crochet d'encliquetage (6) et une ouverture en fente (13) voisine de celui-ci, l'évidement (7) ayant une hauteur légèrement supérieure à une partie de pied (8) du crochet d'encliquetage (6) et en ce que la cloison (12) formant ressort est déplacée vers l'extérieur dans une position de montage (C) courbée, lors de la traversée d'une tête (9) du crochet d'encliquetage (6) et en ce que la cloison (12) se replace dans sa position initiale (B), après passage de la tête (9).

2. Véhicule automobile selon la revendication 1, caractérisé en ce que l'évidement (7) est prévu sur l'élément d'habillage (1) en matière plastique, tandis que le crochet d'encliquetage (6) est formé sur l'élément de carrosserie (3) en matière plastique.

3. Véhicule automobile selon la revendication 2, caractérise en ce que l'élément d'habillage (1) est formé par une grille d'entrée d'air (4).

4. Véhicule automobile selon la revendication 2, caractérisé en ce que l'élément de carrosserie (3) est constitué par un revêtement d'avant (5) réalisé dans un matériau élastique.

5. Véhicule automobile selon la revendication 1, caractérisé en ce que la cloison (12) s'étend à côté de la surface extérieure (14) plane du crochet d'encliquetage (6).

6. Véhicule automobile selon la revendication 1, caractérisé en ce que la cloison (12) est de paroi relativement mince, vue dans le sens de la hauteur.

7. Véhicule automobile selon la revendication 1, caractérisé en ce qu'il est prévu une surface d'attaque (15) s'étendant obliquement sur la tête d'encliquetage (9).

8. Véhicule automobile selon la revendication 1, caractérisé en ce que l'évidement (7) de l'élément d'habillage (1) présente une largeur nettement plus grande que le crochet d'encliquetage (6) formé sur l'élément de carrosserie (1).
